Europäisches Patentamt

European Patent Office

Office européen des brevets

(19)

(11) Veröffentlichungsnummer: **0 093 788 B1**

(12) **EUROPÄISCHE PATENTSCHRIFT**

(45) Veröffentlichungstag der Patentschrift:
07.01.88

(21) Anmeldenummer: **82104022.7**

(22) Anmeldetag: **08.05.82**

(51) Int. Cl.⁴: **G 05 B 19/12**

(54) **Zeitschalteinrichtung.**

(43) Veröffentlichungstag der Anmeldung:
**16.11.83 Patentblatt 83/46**

(45) Bekanntmachung des Hinweises auf die Patenterteilung:
**07.01.88 Patentblatt 88/1**

(84) Benannte Vertragsstaaten:
**CH DE FR GB IT LI SE**

(56) Entgegenhaltungen:
**DE - A - 2 433 953**
**DE - A - 2 649 994**
**DE - U - 1 960 355**

**LÖBEL-MÜLLER-SCHMID: Lexikon der**
**Datenverarbeitung, 2.Auflage 1971, SIEMENS AG,**
**Berlin-München, S.347-351, Abschnitte**
**Magnetplattenspeicher, Magnetschichtspeicher und**
**S.20-22, Abschnitt Abtasten**

(73) Patentinhaber: **GRÄSSLIN KG, Bundesstrasse 36,**
**D-7742 St. Georgen (DE)**

(72) Erfinder: **Kammerer, Gerd, Schiltachweg 15, D-7742 St.**
**Georgen (DE)**
Erfinder: **Ulmer, Manfred, am Sommerrain 11, D-7742 St.**
**Georgen (DE)**
Erfinder: **Thoma, Fritz, Leimengrubweg 12,**
**D-7612 Haslach (DE)**

(74) Vertreter: **Thoma, Friedrich Xaver, Buchenstrasse 20,**
**D-7612 Haslach i.K. (DE)**

ACTORUM AG

## Beschreibung

Die Erfindung bezieht sich auf eine Zeitschalteinrichtung mit einem kreisscheibenförmigen Programmträger mit einem konzentrischen ringförmigen Bereich, der eine Programmspur trägt, mit Antriebseinrichtungen zur Erzeugung einer zeitproportionalen Drehbewegung des Programmträgers um seine zentrale Achse, mit einer optoelektronischen Abtasteinrichtung zum Lesen der Programmspur während der Rotation des Programmträgers, mit einem Schreibelement zur Erzeugung der Programmspur durch Auf- oder Abtragen eines Beschichtmittels, mit einem die Antriebseinrichtung sowie den damit gekuppelten Programmträger und die Abtasteinrichtungen aufnehmenden Gehäuse.

Bei derartigen Zeitschalteinrichtungen ist eine Vorrichtung zur Programmierung solcher optoelektronisch abtastbarer Programmträger erforderlich, die es ermöglicht, eine Programmspur bedienungseinfach, übersichtlich, funktionssicher und hinreichend genau bezogen auf eine Zeitmarke zu programmieren, zur Erzielung kleinster, definierter Schaltzeitabstände zweier aufeinanderfolgender Schaltbefehle. Dabei soll sichergestellt sein, dass eine derartige Vorrichtung hinsichtlich des genauen Anfangs und Endes eines Programmelementes der Programmspur, insbesondere bezogen auf eine Zeitmarke oder auf eine Zeitskala, hinreichend reproduzierbar arbeitet und bedienbar ist.

Aus der DE-OS-2 433 935 ist ein Informationsträger für Werkzeugmaschinen bekannt, der kontaktlos abgetastet der Betätigung eines Steuergerätes dient. Der auswechselbare Informationsträger ist mit konzentrischen ringförmigen Schaltbahnen versehen, deren Länge manuell mit einem Schreibstift verlängert oder erforderlichenfalls mit einem geeigneten Gerät, beispielsweise einem Radiermesser, verkürzt werden können. Der Informationsträger ist zur Festlegung der Null-Lage am Rand mit einer Kerbe versehen.

Die Programmierbarkeit dieses Informationsträgers ist nicht nur äusserst ungenau, sondern eignet sich kaum zur Erzielung relativ kleiner und zueinander definierter Schaltzeitabstände zweier aufeinanderfolgender Schaltbefehle. Ausserdem kann ein derart programmierter Informationsträger nicht hinreichend reproduzierbar arbeiten und bedient werden. Für den Einsatz in einer Zeitschalteinrichtung ist dieser Informationsträger völlig ungeeignet.

Bei einem, aus der DE-A-2 649 994, bekanntgewordenen Programmschaltwerk mit einem scheibenförmigen Programmträger aus einem durchsichtigen Werkstoff sind Rillen vorgesehen, in welche mit einem Schreibgerät ein Programm eingeschrieben werden kann, das optoelektronisch abgetastet wird. Das Programm kann dort unmittelbar am jeweiligen Einsatzort eingeschrieben werden. Es ist allerdings erforderlich, dass der Programmträger zum Programmieren aus dem Werk ausgebaut wird.

Diese Art der Programmierung erfüllt zwar zu einem Teil die Erfordernisse, ist jedoch aufgrund der freihändigen Einschreibung der Programmspur in die vorgegebenen Rillen ungenau und unreproduktiv und für ein zeitgenaues, definiertes Schalten ungeeignet.

Aus dem DE-GM-1 960 355 ist eine Kurvenscheibe für Proschaltwerke bekanntgeworden, welche unmittelbar am jeweiligen Einsatzort, im aufmontierten Zustand auf der Antriebswelle des Werkes programmiert werden kann indem mit einem Werkzeug nach Art einer Schere ein Umfangsstreifen manuell aus der Kurvenscheibe herausgeschnitten wird, der der gewünschten Steuerprogrammfunktion des Werkes entspricht.

Auch diese Einrichtung erfüllt zwar die Erfordernis der Programmierungsmöglichkeit am jeweiligen Einsatzort, sie ist jedoch zur Erzielung von kleinen definierten Schaltzeitabständen zweier aufeinanderfolgender Schaltbefehle ungeeignet. Ausserdem kann mit einer solchen Programmierungsart keine Reproduzierbarkeit eines Programms erzielt werden.

Der Erfindung liegt die Aufgabe zugrunde, bei einer Zeitschalteinrichtung der eingangs genannten Art, eine einfache, übersichtliche und hinreichend genaue Programmierung eines Programmträgers zu erzielen.

Diese Aufgabe wird mit den Merkmalen im kennzeichnenden Teil des Patentanspruchs gelöst und in Unteransprüchen sind weitere Ausbildungen beansprucht.

Vorteilhaft bei der Zeitschalteinrichtung nach der Erfindung ist nicht nur die einfache, zweckmässige und jeweils individuell anwendungs- und einsatzbezogene Programmierungsmöglichkeit eines Programmträgers, sondern auch die erzielbare Programmspurgenauigkeit und -reproduzierbarkeit.

Einige Ausführungsbeispiele solcher Zeitschalteinrichtungen mit Vorrichtungen nach der Erfindung sind in der Zeichnung dargestellt und werden im folgenden näher erläutert. Es zeigen

Fig. 1 eine schaubildliche Ansicht einer Zeitschalteinrichtung.

Fig. 2 eine Vorderansicht auf eine Zeitschalteinrichtung nach Fig. 1, in der Ausführung einer Schaltuhr, mit einer schieberartigen Vorrichtung zum Programmieren einer Programmspur.

Fig. 3 eine Schnittansicht durch eine Vorrichtung nach Fig. 2, in der Funktionsstellung Abtasten der Programmspur,

Fig. 4 eine Schnittansicht durch die Vorrichtung nach Fig. 2, in der Funktionsstellung Programmieren einer Programmspur,

Fig. 5 eine Schnittansicht durch die Vorrichtung nach Fig. 2, in der Funktionstellung Aus,

Fig. 6 eine Schnittansicht durch die Vorrichtung nach Fig. 2, in der Funktionsstellung Löschen oder Umschreiben einer Programmspur,

Fig. 7 eine Seitenschnittansicht durch einen Teil der Vorrichtung nach Fig. 6 und

Fig. 8 eine Querschnittsansicht durch einen speziell ausgebildeten und angeordneten Programmträger.

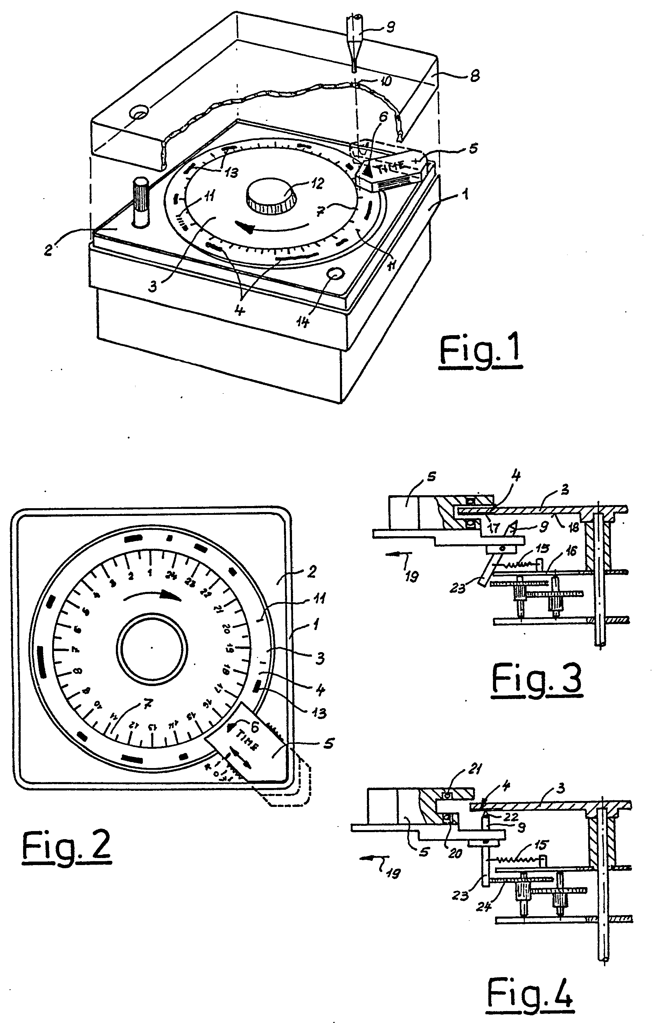

Die Fig. 1 zeigt eine Zeitschalteinrichtung in einem Gehäuse 1 mit einem auf der Vorderseite 2 der Einrichtung funktionskonform angeordneten Programmträger 3, der im Uhrzeigersinn zeitproportional umläuft. Der Programmträger 3 ist mit Programmspuren 4 versehen, die optoelektronisch von einer hier nicht näher gezeigten Gabellichtschranke abgetastet oder gelesen werden, die in der Baueinheit 5 auf der Zeitschalteinrichtung angeordnet ist. Auf der Vorderseite der Baueinheit 5 und unmittelbar bezogen auf den Lesestrahl der Abtasteinrichtung ist ausserdem eine Zeitbezugsmarke 6 vorgesehen, zur Zeitanzeige an der Skala 7 auf dem Programmträger.

Die Vorderseite 2 der Zeitschalteinrichtung ist von einem abnehmbaren Abdeckglas 8 abgedeckt. Das Ausführungsbeispiel zeigt, wie der Programmträger 3 unmittelbar am Einsatzort der Zeitschalteinrichtung mit einer Programmspur 4 beschrieben werden kann. Zu diesem Zweck wird ein Schreibelement 9 in einer Führung 10 im Abdeckglas 8 über dem Programmträger 3 und dem dort vorgesehenen radial verlaufenden Programmspurbereich geführt. In dieser Ausführung ist es allerdings erforderlich, dass die Baueinheit 5 für den Zeitraum der Programmierung der Programmspuren 4 in die punktierte Position ausgeschwenkt wird.

Die Gabellichtschranke liest das Durchlicht, das eine Programmspur 4 aufweist. Der Programmträger 3 ist deshalb aus einem durchsichtigen oder transparenten Werkstoff hergestellt und auf der Vorderseite mit einem abtragbaren Beschichtmittel 17 versehen. Dieses Beschichtmittel 17 wird beim Herstellen einer Programmspur 4 von dem stichelförmigen Schreibelement 9 abgetragen. Es ist ersichtlich, dass auf diese Weise relativ schmale Programmstriche 11 auf einer Programmspur 4 erstellt werden können. Bei einem Aussendurchmesser einer Programmspur 4 und einer Umlaufzeit des Programmträgers 3 von einer Umdrehung in 24 Stunden ergibt ein solcher Programmstrich 11 eine Schaltimpulslänge von ca. 10 Minuten. Vergleichbar mit dieser Zeitdauer wären demnach auch die erzielbaren Schaltzeitabstände zweier aufeinanderfolgenden Schaltbefehle. Derartige Werte sind mit den bekannten, am Einsatzort programmierbaren, Zeitschalteinrichtungen nicht erzielbar.

Anstelle von Programmstrichen 11 können auch sogenannte Programmbalken 13 beliebiger Länge geschrieben werden. Zu diesem Zweck kann der Programmträger 3 mittels des Stellknopfes 12 gedreht werden. Die Programmstriche 11 und/oder die Programmbalken 13 ergeben auf dem Programmträger 3 eine endlose Programmspur 4. Nach erfolgter Programmierung wird bei dieser Ausführung die Baueinheit 5 wieder über den Programmträger 3 geschwenkt.

Es ist vorgesehen, dass in einer vergleichbaren Reihenfolge wie beim Schreiben einer Programmspur 4, ein Löschen oder Umschreiben einer Programmspur 4 oder bestimmter Teile hiervon vorgenommen werden kann. Das Schreibelement 9 wäre durch ein Löschelement ersetzt, das die abgetragenen Programmspurstellen des Beschichtmittels 17 auf dem Programmträger 3 wieder schliesst, indem ein entsprechendes Beschichtmittel durch das Löschelement mittelbar aus einem Löschband 27 oder einem Löschstreifen, wie aus der Schreibmaschinentechnik her bekannt, aufgetragen wird. Es ist jedoch auch vorgesehen, dass das Löschelement unmittelbar mit einem Beschichtmittel ausgestattet ist, zur Abdeckung der zu löschenden Programmspurteile. Im äussersten Falle genügt es, wenn mit einer Farbe, aus einem Farbstift oder einem Filzschreiber die zu löschenden Programmspurteile abgedeckt werden. Es hat sich gezeigt, dass ohne Bedenken eine Neuprogrammierung über abgedeckten Programmspurstellen möglich ist.

Anstelle einer Gabellichtschranke zur optoelektronischen Abtastung einer Programmspur 4 kann auch eine Abtastvorrichtung nach dem Reflexionsprinzip eingesetzt werden. In diesem Falle kann der Programmträger 3 aus einem nichttransparenten metallenen, kunststoff- oder papierartigen Werkstoff bestehen.

Insbesondere bei einer Verwendung von Reflexionslicht zum Abtasten von Programmspuren 4 kann eine Vorrichtung geschaffen werden, die nicht näher dargestellt, von der, in der Fig. 1 gezeigten, Ausführung vorteilhaft abweicht. Zu diesem Zweck wird die Baueinheit 5 nicht mehr zum Schreiben einer Programmspur 4 aus dem Programmträger 3 geschwenkt, sondern kann über der Programmspur 4 auf dem Programmträger 3 stehen bleiben, indem die Baueinheit 5 über der Programmspur 4 gabelförmig ausgebildet ist und mit einem Schreib- oder Löschelement 9 zwischen den beiden Gabelzinken hindurch eine Programmspur 4 geschrieben wird. In den beiden Gabelzinken wäre auf der einen Seite der Lichtsender und auf der anderen Seite der Lichtempfänger der Abtasteinrichtung angeordnet. Der Gabelausschnitt selbst kann dort als Zeitbezugsmarke dienen.

Bei einem Ausführungsbeispiel, wie es die Fig. 1 zeigt, können das Schreibelement 9 und erforderlichenfalls ein Löschelement Bestandteile der Zeitschalteinrichtung sein und dort insbesondere vorderseitig in entsprechenden koaxialen Öffnungen oder Behältnissen 14 gelagert sein.

Eine, zur Fig. 1, weitergebildete Schreib- und/oder Löschvorrichtung für eine Zeitschalteinrichtung zeigen die Figuren 2 bis 7. Dort ist die Schreib- und/oder Löschvorrichtung zusammen mit der Abtasteinrichtung 20, 21 in der Baueinheit 5 vereinigt. Die Baueinheit 5 ist auf der Zeitschalteinrichtung bezüglich des Programmträgers 3 stufenweise radial verschiebbar angeordnet.

Im einzelnen bezeichnet 1 das Gehäuse der Zeitschalteinrichtung in der Ausführung einer Schaltuhr, mit einem auf der Vorderseite 2 funktionskonform angeordneten Programmträger 3 mit einer 24-stündigen Zeit-Skala 7, die in Pfeilrichtung zeitproportional umläuft. 4 bezeichnet eine Programmspur. 5 bezeichnet die Baueinheit, welche als radial geradlinig verschiebbarer Schlitten ausgebildet ist, die auf der Zeitschalteinrichtung nichtlösbar angeordnet ist. Die Baueinheit 5 ist in die punktiert angedeuteten Positionen verschiebbar. 6 bezeichnet eine Bezugsmarke für eine Zeitablesung an einer Skala 7 auf dem Programmträger 3. Diese Bezugsmarke 6 dient auch als Bezugspunkt beim Schreiben der Programmspur 4.

Die Fig. 3 zeigt die Baueinheit 5 in einer Position, in der die optoelektronische Abtasteinrichtung über der Programmspur 4 angeordnet ist. Diese Position entspricht demnach der Funktionsstellung Lesen. Unmittelbar an der Baueinheit 5 ist auch das Schreibelement 9 in der Form eines Stichels gelagert. Das Schreibelement 9 steht dort unter der Wirkung einer Feder 15 in einer Schräglage zum Programmträger 3. Es liegt dabei an der Platine 16 als Halteeinrichtung an. Das Beschichtmittel 17 ist bei dieser Ausführung auf der dem Benutzer abgewandten Unterseite 18 des Programmträgers 3 angeordnet.

Wird die Baueinheit 5 in Pfeilrichtung 19 in eine Funktionsstellung, gemäss Fig. 4, verschoben, so befindet sich die Abtasteinrichtung 20, 21 ausserhalb der Programmspur 4. In dieser Funktionsstellung wurde das Schreibelement 9 unter der Wirkung der Feder 15 aufgestellt und in Eingriff mit dem Programmträger 3 gebracht. Auf der, der Schreibspitze 22 gegenüberliegenden Schreibelementseite, steht der Schreibelementschaft 23 mit einem Nockenrad 24 der Antriebseinrichtung in Eingriff, das das Schreibelement 9 gegen die Wirkung der Feder 15 radial hin und her bewegt. Der Hub dieser Bewegung entspricht der vorgesehenen radialen Länge oder der Höhe eines Programmstrichs 11 oder eines Programmbalkens 13.

Wird der Programmträger 3 manuell oder durch den zeitproportionalen Antrieb bewegt, dann wird ein Programmbalken 13 geschrieben. Wird jedoch bei zeitproportionalem Antrieb die Baueinheit 5 kurzfristig von Lesen auf Schreiben und zurück auf Lesen bewegt, dann wird ein Programmstrich 11 geschrieben.

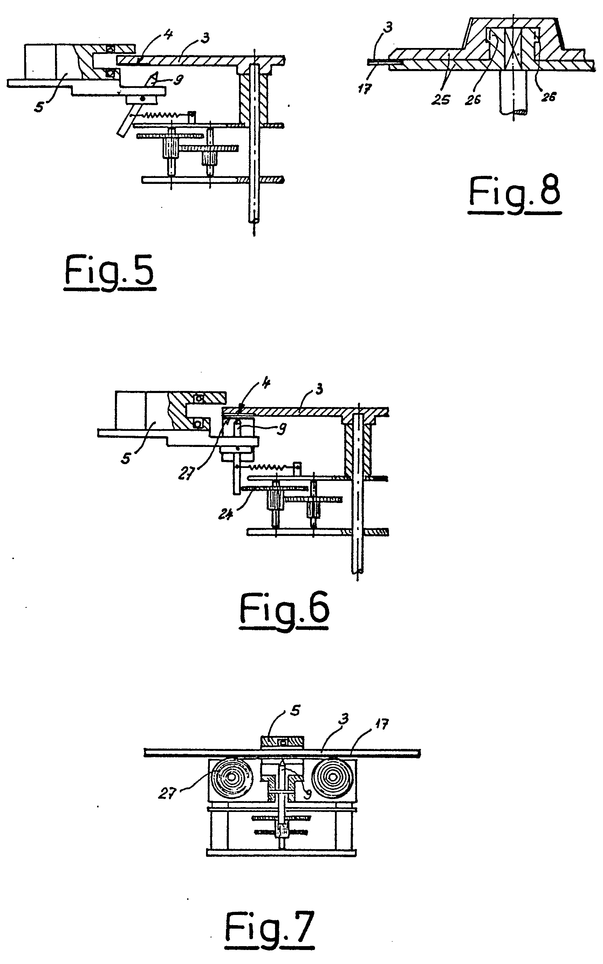

Wird die Baueinheit 5 in eine Funktionsstellung gemäss Fig. 5 verschoben, dann befindet sich sowohl das Schreibelement 9 als auch die Abtasteinrichtung 20, 21 ausserhalb der Programmspur 4. Diese Funktionsstellung entspricht der Aus-Stellung.

Aus der Fig. 6 ist ersichtlich, wie im Bereich der Programmspur 4 ein Löschband 27 zusammen mit dem Schreibelement 9 wirksam sein kann. Damit ist es möglich, Teile der Programmspur 4 oder diese insgesamt zu löschen. Das Schreibelement 9 wird dabei vom Nockenrad 24 beaufschlagt, das durch die Antriebseinrichtung angetrieben wird. Das zum Einsatz kommende Löschband 27 kann in einer Kassette abgepackt sein, wie diese in der Schreibmaschinentechnik Anwendung finden. Anstelle eines Löschbandes kann auch eine Löschscheibe treten, wenn dies von Vorteil sein sollte.

Wie die Fig. 7 zeigt, kann das Löschband 27 zum Zwecke eines zuverlässigen Vorschubs beim Löschvorgang von der Antriebseinrichtung gesteuert werden.

Die Fig. 8 zeigt einen folienartigen, ringförmig ausgebildeten Programmträger 3, der auf eine Zeitscheibe 25 aufgesetzt sein kann. Eine solche Zeitscheibe 25 kann mit einer Schnellwechselvorrichtung mit einem Bajonettverschluss 26 zwischen den beiden Zeitscheibenteilen ausgerüstet sein. Der Programmträger 3 ist dabei lagenfixiert kraftschlüssig in der Zeitscheibe 25 eingespannt.

**Patentansprüche**

1. Zeitschalteinrichtung mit einem kreisscheibenförmigen Programmträger (3) mit einem konzentrischen ringförmigen Bereich, der eine Programmspur (4) trägt, mit Antriebseinrichtungen zur Erzeugung einer zeitproportionalen Drehbewegung des Programmträgers (3) um seine zentrale Achse, mit einer optoelektronischen Abtasteinrichtung (5, 20, 21) zum Lesen der Programmspur (4) während der Rotation des Programmträgers (3), mit einem Schreibelement (9) zur Erzeugung der Programmspur (4) durch Auf- oder Abtragen eines Beschichtmittels (17), mit einem die Antriebseinrichtung sowie den damit gekuppelten Programmträger (3) und die Abtasteinrichtung (5, 20, 21) aufnehmenden Gehäuse (1), gekennzeichnet durch eine mit dem Gehäuse (1) verbundene Halteeinrichtung (10; 5, 16) für das Schreibelement (9), welche so ausgebildet ist, dass das Schreibelement (9) mittels dieser Einrichtung (10; 5, 16) mit dem auf der Antriebseinrichtung montierten Programmträger (3) innerhalb des ringförmigen Bereichs in Eingriff gebracht werden und dabei sowohl in dieser Stellung gehalten werden, als auch in radialer Richtung gegen den Programmträger bewegt werden kann.

2. Zeitschalteinrichtung nach Anspruch 1, dadurch gekennzeichnet, dass die Halteeinrichtung (10) derart angeordnet ist, dass das Schreibelement (9) mit der dem Benutzer zugewandten Seite des Programmträgers (3) in Eingriff gebracht werden kann.

3. Zeitschalteinrichtung nach Anspruch 1, dadurch gekennzeichnet, dass die Halteeinrichtung (5, 16) so angeordnet ist, dass das Schreibelement (9) mit der dem Benutzer abgewandten Seite des Programmträgers (3) in Eingriff gebracht werden kann.

4. Zeitschalteinrichtung nach Anspruch 2, dadurch gekennzeichnet, dass die Halteeinrichtung (10) eine Führungsöffnung im Gehäuse umfasst, die dem von der Abtasteinrichtung (5, 20, 21) erfassten Bereich des Programmträgers (3) gegenüberliegt und dass die Abtasteinrichtung (5, 20, 21) schwenkbar gelagert ist.

5. Zeitschalteinrichtung nach einem der Ansprüche 1 oder 3, dadurch gekennzeichnet, dass die Abtasteinrichtung (5, 20, 21) aus einer Baueinheit (5) besteht, die bezüglich des Programmträgers (3) stufenweise radial verschiebbar angeordnet ist und dass die Halteeinrichtungen (5, 16) mit der Baueinheit (5) gekuppelte Betätigungseinrichtungen (15, 24) zur Überführung des Schreibelementes (9) in die Schreibstellung bei Verschiebung der Baueinheit (5) aufweist.

6. Zeitschalteinrichtung nach Anspruch 5, dadurch gekennzeichnet, dass die Betätigungseinrichtungen eine Feder (15) und ein von der Antriebseinrichtung angetriebenes Nockenrad (24) umfassen, dass das Schreibelement (9) in der Halteeinrichtung (5, 16) schwenkbar gelagert ist und durch die Wirkung des Nockenrades (24) bei Verschieben der Baueinheit (5) gegen die Wirkung der Feder (15) in die Schreibstellung verschwenkbar ist.

7. Zeitschalteinrichtung nach einem der vorhergehenden Ansprüche, dadurch gekennzeichnet, dass das Schreibelement (9) stichelförmig ausgebildet ist und eine verrundete Schreibspitze (22) aufweist.

8. Zeitschalteinrichtung nach einem der vorhergehenden Ansprüche, gekennzeichnet durch eine im Gehäuse (1) angeordnete Löschvorrichtung, welche ein gegenüber dem Programmträger (3) verlaufendes Löschband (27) aufweist, das mittels des Schreibelementes (9) mit dem Programmträger (3) in Kontakt gebracht werden kann.

9. Zeitschalteinrichtung nach einem der vorhergehenden Ansprüche, dadurch gekennzeichnet, dass der Programmträger (3) aus einem nichttransparenten papierartigen Werkstoff besteht.

## Claims

1. A time switch device comprising a circular disc-shaped programme carrier (3) having a concentric annular zone which bears a programme track (4), drive devices which produce a time-proportional rotary movement of the programme carrier (3) about its central axis, an opto-electronic scanning device (5, 20, 21) which reads the programme track (4) during the rotation of the programme carrier (3), a recording element (9) which produces the programme track (4) by applying or removing a coating means (7), and a housing (1) which accommodates the drive device and the coupled programme carrier (3) and scanning devices (5, 20, 21), characterised by a support device (10; 5, 16) for the recording element (9), which is connected to the housing (1) and which is so designed to be such that by means of this device (10; 5, 16) the recording element (9) is brought into engagement with the programme carrier (3), which is mounted on the drive device, within the annular zone and can thereby be held in this position, whilst it can also be moved radially against the programme carrier.

2. A time switch device as claimed in Claim 1, characterised in that the support device (10) is so arranged that the recording element (9) can be engaged with that side of the programme carrier (3) which faces towards the user.

3. A time switch device as claimed in Claim 1, characterised in that the support device (5, 16) is so arranged that the recording element (9) can be engaged with that side of the programme carrier (3) which faces away from the user.

4. A time switch device as claimed in Claim 2, characterised in that the support device (10) comprises a guide opening in the housing which is arranged opposite that zone of the programme carrier (3) which is monitored by the scanning device (5, 20, 21), and that the scanning device (5, 20, 21) is pivotally mounted.

5. A time switch device as claimed in one of Claims 1 or 3, characterised in that the scanning device (5, 20, 21) consists of a structural unit (5) which is arranged so as to be radially displaceable in steps relative to the programme carrier (3) and that the support device (5, 16) has actuating devices (15, 24) which are coupled to the structural unit (5) and which bring the recording element (9) into the recording position when the structural unit (5) is displaced.

6. A time switch device as claimed in Claim 5, characterised in that the actuating devices comprise a spring (15) and a cam wheel (24) which is driven by the drive device, that the recording element (9) is pivotally mounted in the support device (5, 16) and by the action of the cam wheel (24) when the structural unit (5) is displaced can be pivoted into the recording position against the action of the spring (15).

7. A time switch device as claimed in one of the preceding Claims, characterised in that the recording element (9) is chisel-shaped and has a rounded recording tip (22).

8. A time switch device as claimed in one of the preceding Claims, characterised by an erasing device which is arranged in the housing (1) and which comprises an erasing strip (27) which is arranged opposite the programme carrier (3) and can be brought into contact with the programme carrier (3) by means of the recording element (9).

9. A time switch device as claimed in one of the preceding Claims, characterised in that the programme carrier (3) is made of a non-transparent, paper-like material.

## Revendications

1. Dispositif chronorupteur comportant un support de programme (3) présentant une zone concentrique de forme annulaire qui supporte une piste (4) de programmation, comportant des dispositifs d'entraînement destinés à produire un mouvement rotatif, proportionnel au temps qui passe du support de programme (3) autour de son axe central, comportant une installation de palpeurs opto-électroniques (5, 20, 21) destinés à lire la piste de programmation (4) pendant la rotation dudit support de programme (3), comportant un élément enregistreur (9) destiné à produire la piste de programmation (4) par application ou arrachage d'un enduit (17), comportant un carter (1) recevant d'une part le dispositif d'entraînement et d'autre part le support de programme (3) accouplé à celui-ci, ainsi que les dispositifs palpeurs (5, 20, 21), caractérisé par le fait qu'un dispositif de maintien (10; 5, 16) de l'élément d'enregistrement (9), relié au carter (1) et réalisé de telle sorte que l'élément d'enregistrement (9) peut, au moyen de ce dispositif (10; 5, 16), être amené en position de prise avec le support de programme (3) monté sur le dispositif d'entraînement à l'intérieur de la zone de forme annulaire et en même temps être maintenu dans cette position ou encore être déplacé dans le sens radial en direction dudit support de programme.

2. Dispositif chronorupteur selon la revendication 1, caractérisé par le fait que le dispositif de maintien (10) est disposé de telle sorte que l'élément d'enregistrement (9) peut être amené en position de prise avec le support de programme (3) du côté orienté vers l'utilisateur.

3. Dispositif chronorupteur selon la revendication 1, caractérisé par le fait que le dispositif de maintien (5, 16) est disposé de telle sorte que l'élément d'enregistrement (9) peut être amené en position de prise avec le support de programme (3) du côté opposé à l'utilisateur.

4. Dispositif chronorupteur selon la revendication 2, caractérisé par le fait que le dispositif de maintien (10) entoure un orifice de guidage du carter, cet orifice faisant face à la zone du support de programme (3) occupée par le dispositif de palpeurs (5, 20, 21) et par le fait que le dispositif de palpeurs (5, 20, 21) est positionné de manière à pivoter.

5. Dispositif chronorupteur selon l'une des revendications 1 ou 3, caractérisé par le fait que le dispositif de palpeurs (5, 20, 21) est constitué d'un élément constructif (5) qui est disposé de manière à être progressivement et radialement déplacé par rapport au support de programme (3) et par le fait que le dispositif de maintien (5, 6) présente des dispositifs de commande (15, 24) accouplés à l'élément constructif (5) et destinés à transférer l'élément d'enregistrement (9) dans sa position d'enregistrement lors du déplacement de l'élément (5).

6. Dispositif chronorupteur selon la revendication 5, caractérisé par le fait que les dispositifs de commande comprennent un ressort (15) et un pignon de distribution (24) entraîné par le dispositif d'entraînement, et par le fait que l'élément d'enregistrement (9) est monté de manière à pivoter dans le dispositif de maintien (5, 16) et qu'il peut pivoter vers la position d'enregistrement par l'effet du pignon distributeur (24) lorsque l'élément (5) exécute un mouvement de déplacement s'opposant à l'effet du ressort (15).

7. Dispositif chronorupteur selon l'une des revendications décrites plus haut, caractérisé par le fait que l'élément d'enregistrement (9) est de forme pointue et présente une pointe d'écriture (22) arrondie.

8. Dispositif chronorupteur selon l'une des revendications précédentes, caractérisé par le fait qu'un dispositif d'effacement disposé dans le carter (1) présente une bande d'effacement (27) se déroulant de manière à faire face au support de programme (3) et pouvant être mise en contact avec ledit support de programme (3) au moyen de l'élément d'enregistrement (9).

9. Dispositif chronorupteur selon l'une des revendications précédentes, caractérisé par le fait que le support de programme (3) est constitué en un matériau non transparent pouvant être assimilé à du papier.

Fig.1

Fig.2

Fig.3

Fig.4

Fig.5

Fig.8

Fig.6

Fig.7